# EUROPEAN PATENT SPECIFICATION

(11) **EP 1 624 515 B1**
(45) Date of publication and mention of the grant of the patent: **17.12.2008**
(21) Application number: 05291131.0
(22) Date of filing: 26.05.2005
(51) Int. Cl.: H01M 8/02, H01M 8/10, H01M 2/08, H01M 8/24

(54) **Unitized electrochemical cell sub-assembly and the method of making the same**
Einstückige Brennstoffzellen-Untereinheit und Methode zu deren Herstellung
Sous-ensemble d'une pile à combustible monobloc et méthode pour sa fabrication

(30) Priority: 28.05.2004 US 575283 P; 19.07.2004 US 588942 P
(43) Date of publication of application: 08.02.2006
(73) Proprietor: Du Pont Canada Inc., Mississauga ON L5M 2H3 (CA)
(72) Inventor: Andrin, Peter, Napanee Ontario K7R 3X4 (CA); Choudhury, Biswajit, Kingston Ontario K7M 7K9 (CA); Ghosh, Kalyan, Kingston Ontario K79 3J5 (CA); Hooper, Michael A., Kingston Ontario K7L 1S9 (CA); Perti, Deepak, Hockessin Delaware 19707 (US); Brunk, Donald H., Boothwyn Pennsylvania 19601 (US); Ottenhof, Jan, Kingston Ontario K7M 5S5 (CA)
(74) Representative: Hirsch & Associés

(56) References cited:
- US-A- 6 080 503
- US-A1- 2003 031 914
- US-B1- 6 596 427

## Description

### FIELD OF THE INVENTION

The present invention relates to a unitized electrochemical cell sub-assembly and more particularly to a unitized electrochemical cell sub-assembly formed by the integration of the separator and coolant plates with the membrane electrode assembly (MEA). Further this invention relates to methods for fabricating the unitized electrochemical sub-assembly that provide manufacturing simplification.

### BACKGROUND OF THE INVENTION

Polymer electrolyte membrane fuel cells comprise a membrane electrode assembly (MEA) disposed between two current separator plates. Within the membrane electrode assembly lays a pair of fluid distribution layers, commonly referred to as gas diffusion layers (GDL) and an ion exchange membrane. At least a portion of either the ion exchange membrane or gas diffusion layers is coated with noble metal catalysts. The ion exchange membrane is placed between the gas diffusion layers and is compressed to form the membrane electrode assembly. The separator plates provide support for the MEA and act as a barrier, preventing mixing of fuel and oxidant within adjacent fuel cells.

Separator plates, also called flow field plates, perform various functions in the fuel cell, including collecting electrical current generated within the cells, accommodating or distributing cell reactants, removing cell reaction products and assisting with thermal control. To achieve these functions within the electrochemical cell, it is important that the cell form a tightly sealed unit that prevents escape of the gas and fluid. The separator plates are made predominantly of graphite, graphite-polymer composites, sheet metal, electrically conductive polymers, porous graphite or porous graphite-polymer composite materials.

Present construction of proton exchange membrane (PEM) fuel cells has evolved from such designs as those of Grubb (U.S. Pat. No. 2,913,511), Niedrach (U.S. Pat No. 3,432,355), and Adlhart (U.S. Pat No. 4,175,165). All of these designs employ reactant gas seals, which have at least one sealing surface, which directly contacts the membrane electrolyte. This requires that the ion exchange membrane itself be extended outside of the active catalytic area of the cell. These designs require the membrane electrolyte to bridge gaps in cell components such as reactant gas flow fields. Such designs typically result in exposure of the membrane edge to ambient air and/or cooling liquid as well. Exposure of the membrane to ambient air can result in drying of the membrane and exposure to cooling liquid creates the possibility for metal ion contamination. Both these effects reduce the performance of the electrochemical cell and lead to the mechanical degradation of the membrane.

Various attempts have been made in the prior art to provide a seal design for PEM electrochemical cells such that the failure of the membrane-seal junction is minimized. Encapsulation of the edge of the membrane, using an appropriate sealing material, such as thermoplastic gaskets or films, adhesive films, adhesive tapes and gaskets, to create an edge sealed MEA is a well-practiced method. This method has, for example, been disclosed in U.S. 5,264,299; U.S. 5,464,700; U.S. 6,057,054; U.S. 6,080,503; U.S. 6,159,628; U.S. 6,440,597; WO 01/80339 A2; WO 02/093672; WO 03/063280.

The edge-sealed MEA addresses the issues related to membrane drying, membrane contamination and thus membrane related failure in the electrochemical cell, but it needs extra sealing gaskets when compressed between two separator plates for constructing a functional cell. Therefore, as discussed earlier, the vulnerability of the gaskets limiting the durability of the assembled cells still remains a limitation to the commercial success of the electrochemical cell.

The instability of many seal materials in the aggressive electrochemical cell environment is a significant problem. It is a challenge to find a material that will provide the required durability for use in the electrochemical cell environment. Some of the sealant materials used are not very stable in the reducing environment, such as on the anode side of the electrochemical fuel cell where hydrogen is consumed. These materials work well on the air or oxidant side, but fail in the presence of hydrogen. Therefore, the sealant material should preferably be stable in both hydrogen and oxygen environments.

In general, separator plates are sealed around their periphery and at the junctions between separator plates and the MEA to prevent liquid or gases from leaking. Particularly in the case of separator plates made of graphite or graphite composite, the adherence of the seal to the graphite is problematic. To achieve the greatest possible reliability in this case, a recessed surface is provided in the plate to accommodate the GDL and a groove is produced in the form of an undercut (U. S. Patent No. 6,280,870). Alternatively, the sealing surface is rendered very rough to anchor the sealing elements in the separator plates (U.S. Patent No. 6,348,279). The pores in the porous separator plates have the advantage of anchoring with the sealing material. Typically, gaskets achieve interfacial or gas penetration sealing. Gaskets are applied between each component of the cell and are fixed to the separator plates or GDL using a suitable adhesive as described in U.S. Patent No. 6,338,492 B1 and EP 0665984 B1. The gaskets may also be formed in the channels or grooves provided on the separator plate or GDL.

The most common type of sealants used in polymer electrolyte membrane fuel cells for interfacial seals are gaskets made of silicone rubber, RTV, E-RTV, neoprene rubber or like elastomeric materials. Gaskets of this type are disclosed in WO 02/093672 A2, U.S. Patent No. 6,337,120 and U.S. Patent Application Nos. 20020064703, 20010055708 and 20020068797.

There are several disadvantages associated with using sealant materials such as silicone rubber, RTV, E-RTV to seal the periphery of separator plates. These sealant materials may not be compatible with the plate material used, which may be graphite, graphite composites or metals. Over the course of an electrochemical cell's service life, the elastomeric gaskets are subjected to prolonged deformation and harsh operating environment. Over time, such gaskets tend to decrease resilience, for example due to compression set and chemical degradation, and may become permanently deformed. This impacts negatively on the sealing function and can ultimately lead to an increased incidence of leaks.

Material incompatibility may induce leakage around the sealant material, causing intermixing of reactant fluids and/or coolant fluid, resulting in failure of the cell. The plastic deformation of these gasketed plates increases as the pressure on the sealing area of the plate is continuously applied. An uneven gasket pressure distribution along the length of an electrochemical cell stack, with a minimum in the centre of the stack, can be observed in stacks using such a sealant material. Thus, the sealant materials are typically exposed to high pressure in the end plate areas in order to guarantee adequate sealing performance in the centre cells of the stack. Increased sealing pressure applied to the cells in the end plate areas may lead to increased plastic deformations and premature gasket and MEA failure. Moreover, it is often difficult to correctly position the gaskets in the grooves or channels provided on the bi-separator plates or GDL using conventional manufacturing methods, thus also leading to deformation.

Several other attempts have been made to create seals within the electrochemical cell using alternate means or to incorporate better designs and different sealant/bonding material. For example, U.S. Patent No. 6,176,953 describes a method for creating seals between a thermoplastic film and other thermoplastic components of the fuel cell using ultrasonic welding. The welding process described in this patent was used for shearing and welding a membrane electrode assembly (MEA) between a bracket and a frame for constructing a frame around the MEA. However, this patent does not describe a method of sealing together the separator plates of the fuel cell or a method of sealing the separator plates directly to the MEA.

PCT Patent Application WO 02/091506 A1 describes a method for sealing the separator plates of a fuel cell by stacking the separator plates together and using ultrasonic welding. However, the welding process does not describe a method of sealing two separator plates, while having a MEA sandwiched between them or a method of sealing separator plates to the MEA. Moreover, this patent describes only ultrasonic welding as a preferred welding method.

US Patent No 6261711 describes a method for creating a seal between two separator plates with the membrane extended from the MEA. The fluid seal disclosed in this patent includes a compressible member on the first separator plate and a gasket disposed within a groove in the second separator plate. The extended part of the membrane from the MEA is sandwiched between the gasket and the compressible member, which conforms to the surface of the gasket to form a fluid seal, as two separator plates are compressed together. However, this does not describe a method for creating a rigid seal between two separator plates, which can hold both separator plates together maintaining the compressibility of the MEA. The method as described in this patent relies on the stack compression force for maintaining the MEA compression as well as the force needed for creating a gas-tight seal.

PCT Patent Application WO 01/80339 A2 describes a method for creating seals between two fuel cell separator plates or a fuel cell separator plate and the MEA using a polymer welding process. The fuel cell separator plate consists of a non-conductive polymer frame, which is being used for polymer welding purpose. However, this patent does not describe a method of sealing fuel cell separator plates without non-conductive frames. This patent also discloses that the conductive and non-conductive part of the fuel cell separator plate consists of the same polymer binder. Due to the presence of the same polymer in the non-conductive (sealing) and conductive regions, there is a possibility that the conductive part of the plate may get damaged during the sealing process, which usually involves evolution of heat.

The concepts of a modulized single cell and a modulized cell unit have been described in U.S. Patent Application No. 2002/0110720. A desired amount of silicon rubber (RTV) is applied in the circumferential portion between the anode and cathode bipolar plates placed under a predetermined compression pressure and then the RTV is cured to create an effective seal between the plates, an edge seal for the MEA and hence unitizing all the associated components into an integrated unit. However, the effectiveness of the seal is dependent on the flow characteristics of uncured RTV material and the curing properties, such as volumetric change of the material during curing process, in enclosed grooves.

Use of sealing layers possessing different coefficients of elasticity to assemble different layers of an electrochemical cell module have been disclosed in U.S. Patent No. 6,440,597. It is proposed that different sealant materials be used between different layers, depending on the needed stiffness and flexibility between the layers. Use of silicon rubber, butyl rubber and epoxy adhesives are cited. Sealing materials with low elasticity were used on anode and cathode plates and materials with high elasticity around the extended part of the ion-exchange membrane of the MEA. However, the stability of these materials in the electrochemical cell environment, and the method and ease of assembling the components to make a unitized module was not disclosed.

Applications of different sealing materials on plates and membranes to create an edge seal and a periphery seal have been disclosed in U.S. Patent No. 6,159,628 and U.S. Patent Application Nos. 2001/0001052 and 2003/0124402. Disclosed is the use of thermoplastic materials with adhesion and surface anchoring properties, such as Thermobond^{®} films, that are compatible with the pores of porous plates. Also disclosed is a method for fabricating the seal between different fuel cell components. The thermoplastic material was hot pressed to melt and impregnate around the edge of porous gas diffusion substrate and/or around the edge of the porous plate to create an edge sealed unitized cell module. A foam gasket material was used to create a seal between the plate and edge sealed MEA. Hence, two different sealing materials, a foam gasket and a melt processable thermoplastic film with adhesion property, were used to provide complete sealing for the electrochemical cell. This was done because none of the sealing materials could perform both edge and periphery sealing together. However, the use of different sealing materials and their application steps makes the cell unitization process very time consuming and expensive, which is a hurdle to the commercialization of electrochemical cells.

Use of a recessed flow field area for accommodating the electrodes of the MEA have been disclosed in U.S. Patent No. 4,324,844. A recessed area or a stepped configuration around the sealing area provides support to the gas diffusion layer of the electrode and provides an extra area for sealing.

A unitized plate and gas diffusion layer assembly have been disclosed in U.S. Patent No. 6,280,870. A recessed or stepped area was created in the plate to accommodate the gas diffusion substrate. The objective was to prevent the dislocation of the gas diffusion substrate during the assembly of the fuel cell stack and create a unitized module for easy assembly of the stack. However, there is no mention in this patent of obtaining improved sealing around the periphery of the electrochemical cell by using a recessed area in the plate.

U.S. Patent No. 6,180,274 teaches making a unitized cell using an anode plate containing a recessed area. The recessed area is made such that it can hold the MEA and cathode plate, thus making the assembly process easier. However, the possibility of improved sealing due to the presence of the recessed area was disclosed.

Therefore, there remains a need to simplify and reduce the number of individual or separate components in an electrochemical cell stack in order to reduce assembly time and cost of manufacturing. Moreover, it is desirable to provide improved seals within the cells in the stack, which reduces the disadvantages associated with conventional sealing techniques and helps in integrating all the components effectively.

Accordingly, it is an aspect of the present invention to provide a unitized electrochemical cell sub-assembly that comprises an integrated structure of cell components, such as the membrane electrode assembly (MEA), separator plates and/or coolant plates.

Another aspect of the present invention is to provide an electrochemical cell structure that is impervious to gas leakage from the oxidant-to-fuel or fuel-to-oxidant or coolant-to-reactant side of the cell.

Another aspect of the present invention is to provide a method for the easy and low cost manufacture of an electrochemical cell by minimizing the number of thermal and pressure bonding steps required.

Another aspect of the present invention is to provide sealing materials that are stable to the oxidizing and reducing environment of an electrochemical cell, that maintain a durable bond and seal between components.

There, therefore, remains a need to provide a unitized electrochemical cell sub-assembly and more particularly a unitized electrochemical cell sub-assembly formed by the integration of the separator and coolant plates with the membrane electrode assembly (MEA).

### SUMMARY OF THE INVENTION

Numerous other objectives, advantages and features of the invention will become apparent to the person skilled in the art upon reading the detailed description of the preferred embodiments, the examples, and the claims.

In a first aspect of the present invention, there is provided a unitized electrochemical cell sub-assembly according to claim 1.

Preferably, each of the first surfaces of the plates further comprises a second recessed portion configured to accommodate the gas diffusion layer.

In a further aspect, the present invention provides a method of fabricating a unitized electrochemical cell sub-assembly comprising a first separator plate and a second separator plate each comprising a first surface, and a membrane electrode assembly (MEA) comprising an ion exchange membrane and a pair of gas diffusion layers disposed on each of the first surfaces between the first and second plates, wherein the ion exchange membrane has peripheral edges, the method comprising the steps according to claim 13.

Preferably, heat is applied by a technique selected from the group consisting of: resistance welding, ultrasonic welding, heat lamination, hot bonding, laser welding and vibration welding. More preferably, heat is applied by resistance welding technique, comprising the steps of:
a. applying an electrical current across the first and second separator plates to produce localized heat on the sealant polymer insert sufficient to melt the polymer and form the molten polymer; and
b. ceasing to apply the current and applying pressure on the first and second separator plates to allow the molten polymer to cool.

### BRIEF DESCRIPTION OF THE DRAWINGS

The preferred embodiments of the present invention will now be described with reference to the accompanying drawings in which like numerals refer to the same parts in the several views and in which:
Figure 1 is a schematic drawing of a typical fuel cell;
Figure 2 is a partial schematic drawing illustrating a first preferred embodiment of the present invention;
Figure 3 is a partial schematic drawing illustrating a second preferred embodiment of the present invention;
Figure 4 is a partial schematic drawing illustrating a third preferred embodiment of the present invention;
Figure 5 is a partial schematic drawing illustrating a fourth preferred embodiment of the present invention.
Figure 6 is a partial schematic drawing illustrating a fifth preferred embodiment of the present invention.
Figure 7 is a partial schematic drawing illustrating a sixth preferred embodiment of the present invention.

### DETAILED DESCRIPTION OF THE PREFERRED EMBODIMENTS

The preferred embodiments of the present invention will now be described with reference to the accompanying figures.

In one embodiment of the present invention, a unitized electrochemical cell sub-assembly is provided in which monopolar or bipolar gas separator plates and cooling plates are joined together to create a gas tight seal around the edge of the membrane and MEA, as well as to create a fluid tight seal around the periphery of the plates. The unitized cell sub-assembly of this embodiment performs two functions. It has a region dedicated to power generation and a region dedicated to providing structural and sealing support for the cell. By keeping the membrane confined to the active area of the cell (the only region where it is needed), all contact of the membrane with the ambient air or cooling fluid is eliminated. The membrane no longer bridges gaps between cell components. This function is taken over by the chemically inert sealing material.

In another aspect of the invention, the unitized electrochemical cell sub-assembly component consists of a first separator plate joined to a second separator plate. At least portions of the two plates define a chamber in which a portion of the membrane is disposed. The seal is created by placing a non-conductive polymer insert in the chamber adjacent to the portion of the membrane and welding the polymer insert to the plates to form a first seal between the plates. As well, a second seal is also created between the plates, the portion of the membrane extending into the chamber and the membrane electrode assembly. The result is a unitized electrochemical cell sub-assembly that includes two plates and the MEA.

In a further embodiment, the unitized electrochemical cell sub-assembly includes two separator plates in which a chamber is defined adjacent the periphery of the plates. A MEA disposed between the plates, with the edge of the MEA located in the chamber. A non-conductive polymer insert is also placed in the chamber, and heat and pressure are then applied to melt the polymer insert. Heating is then stopped and the polymer hardens to form a first seal between the plates and a second seal between the plates and the edge of the MEA, to create the unitized electrochemical cell sub-assembly.

Alternatively, the sub-assembly may include one or more o-rings to assist in creating the plate-to-membrane seal. In this case, the molten polymer from the insert creates a seal between a portion of the membrane electrode assembly and one of the two plates rather than both plates.

As a further embodiment, the unitized electrochemical cell sub-assembly is made by also using a porous insulating matrix between the sealing polymer and membrane electrode assembly, so that the extended membrane is encapsulated into the porous matrix. Thus, a first seal is created between the first and second separator plates, and a second seal between the plates and the edge of the MEA through the porous insulating matrix.

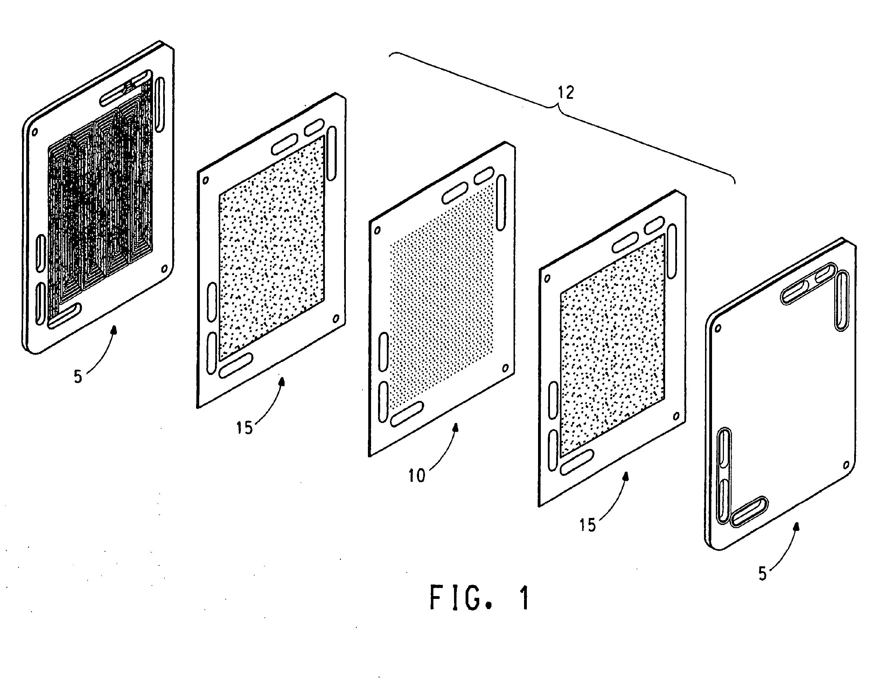

As shown in Figure 1, a typical polymer electrolyte membrane fuel cell comprises a membrane electrode assembly 12 ("MEA") disposed between two conductive separator plates 5. The MEA 12 includes an ion exchange membrane 10 and two gas diffusion layers 15.

The present invention provides a unitized cell component and a method for fabricating it by sealing together different components of an electrochemical cell, particularly a fuel cell.

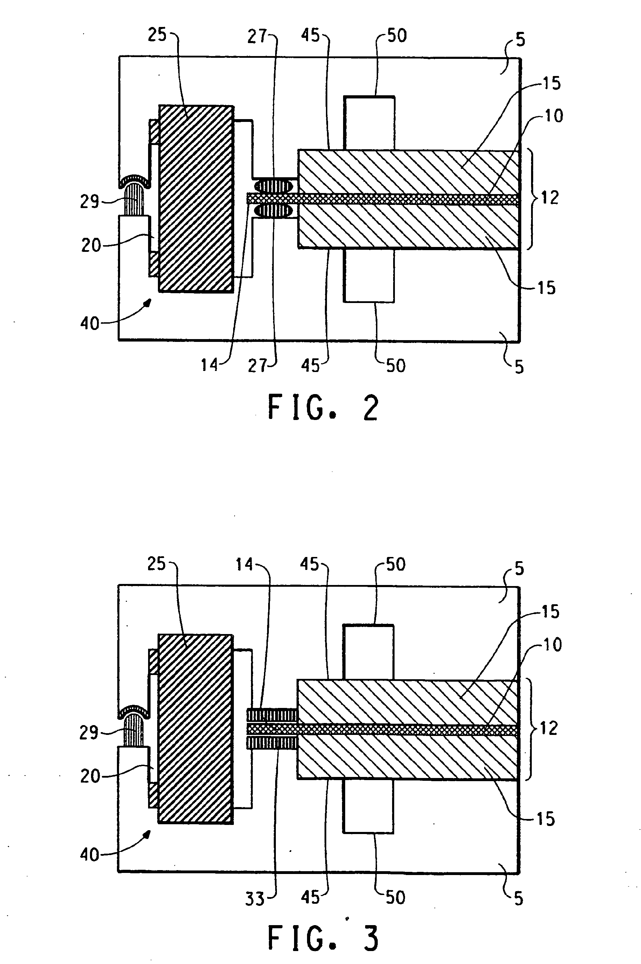

A first embodiment is shown in Figure 2, in which fuel cell sealing is facilitated by the specific configuration of the separator plates 5 and the MEA 12. In Figure 2, only a partial cross section of the separator plates 5 and the MEA 12 near the perimeter of an electrochemical cell are shown. In the embodiment of Figure 2, a chamber 20 is defined by grooves in both separator plates 5 adjacent the periphery of the plates 5. When both separator plates 5 face each other, the grooves in the plates 5 form the chamber 20. Also disposed on each of plates 5 is a stepped or recessed surface 45 along the periphery of the area of the plates 5 where the flow field channels 50 are present. The recessed surface 45 is configured to accommodate the MEA 12 as described below.

A non-conductive thermoplastic polymer insert 25 is placed into the chamber 20. The MEA 12 is disposed within the recessed surfaces 45 between the separator plates 5. The edges of the two gas diffusion layers 15 are accommodated in the recessed areas 45 positioned around the flow field channels 50 of the separator plates 5. A portion 14 of the ion exchange membrane 10 extends outward from the MEA 12 toward the chamber 20 at a position adjacent to the polymer insert 25.

In order to create a seal between the separator plates 5 and the extended portion 14 of the ion exchange membrane 10, the polymer insert 25 is caused to melt within the chamber 20, preferably using a heating technique such as heat melting, resistance welding or hot pressing techniques. When the heating is stopped, pressure is continued to be applied to the separator plates 5 for compressing against each other as the molten polymer cools. As localized heat production stops, and the temperature of the molten polymer drops quickly, resulting in the solidification of the molten polymer, creating permanent seals. A first seal is formed between each of the separator plates 5, and a second seal is formed between the separator plates 5 and the ion-exchange membrane extended portion 14.

It will be apparent to the person skilled in the art that during the sealing process, the nature of the non-conductive polymer insert 25 will dictate the quality of the seal between the conductive separator plates 5 and the ion-exchange membrane extended portion 14. Preferably, a non-conductive polymeric material 25 is used for insert 25 that is compatible with the materials of the conductive separator plates 5 and ion exchange membrane 10 so as to create good seals between these three components. On the other hand, if the non-conductive conductive material of insert 25 is compatible with the conductive separator plates 5 but it is not compatible with the ion exchange membrane 10, then the first seal between the conductive separator plates 5 and non-conductive polymer insert 25 will be a good one, but the second seal between the non-conductive polymer insert 25 and the ion-exchange membrane extended portion 14 will not be as good. In this case an additional third seal between the conductive separator plates 5 and the ion-exchange membrane extended portion 14 is required to maintain the effective seal within the electrochemical fuel cell assembly.

In a further embodiment not shown in Figure 2, the edges of the two gas diffusion layers may extend into the chamber 20 rather than being accommodated completely in the recessed areas 45. Thus, when the polymer insert 25 is caused to melt and then harden within the chamber 20, the sealant polymer will seal and join the separator plates 5 to the edges of the pair of gas diffusion layers.

In a further embodiment, the extended portion of the ion-exchange membrane extended portion 14 may be held between the separator plates 5 using one or more o-rings 27. As shown in Figure 2, o-rings 27 may be arranged on either side of the membrane extended portion 14 to create a gas tight seal between the membrane extended portion 14 and the separator plates 5. During the heat melting process, the molten polymer from insert 25 melts over the o-rings 27 to create a seal between the separator plates 5 and the o-rings 27, while leaving the ion-exchange membrane extended portion 14 intact. Hence the compatibility between the molten polymer from the insert 25 and the ion-exchange membrane 10 is not a limitation for creating a good seal between the conductive plates 5 and ion-exchange membrane 10. The o-rings 27 will assure good sealing between the conductive separator plates 5 and ion-exchange membrane extended portion 14, while the molten polymer insert 25 will create a good seal between the conductive separator plates 5, and between the o-rings 27 and the separator plates 5 to provide a gas-tight unitized cell sub-assembly.

Various other features may be added to the cell sub-assembly of the present invention to decrease the melt compression forces created during welding. For example, the separator plates 5 may be configured so that there is a gap around the periphery of the separator plates 5. A gasket 29 may be placed in the gap to absorb some of the melt compression forces during welding. The gasket 29 also serves to prevent electrical shorts between the separator plates 5.

The chamber 20 may also be configured with a groove 40 for stabilizing the polymer insert 25 within the chamber 20. The groove 40 minimizes movement of the polymer insert 25 during the welding process. The molten polymer may result in a slippery action between the surfaces of the conductive plate 5 and the polymer insert 25, resulting in the displacement of the polymer insert 25 to give undesirable orientation. The groove 40 will prevent the molten polymer from getting in the bottom of the insert and keep the insert in its original position.

Figure 3 depicts an embodiment of the present invention in which the ion-exchange membrane extended portion 14 is surrounded by the sealant polymer and thus they are isolated from the outer environment. A sealant polymer material 33 that is compatible with both the ion-exchange membrane 10 and the plates 5 may be used between the membrane extended portion 14 and the separator plates 5 where the sealant polymer acts as a tie material. By using compatible sealant polymer between the conductive separator plates 5 and the top and bottom surfaces of the ion-exchange membrane extended portion14, the sealing area can be increased. An increased sealing area will result in more effective sealing. The sealant polymer material 33 will allow the ion-exchange membrane extended portion 14 to have a large engagement area with the conductive separator plates 5 and will reduce the pressure point exerted on the membrane 14. In some instances, the sealant polymer material 33 may be the same as the polymer used in the polymer insert 25 where such polymer is compatible with both the plates 5 and the ion-exchange membrane 10. The separator plates 5 will be provided with recessed surface areas 45 around the flow field channels 50 to accommodate GDL into the recessed surface.

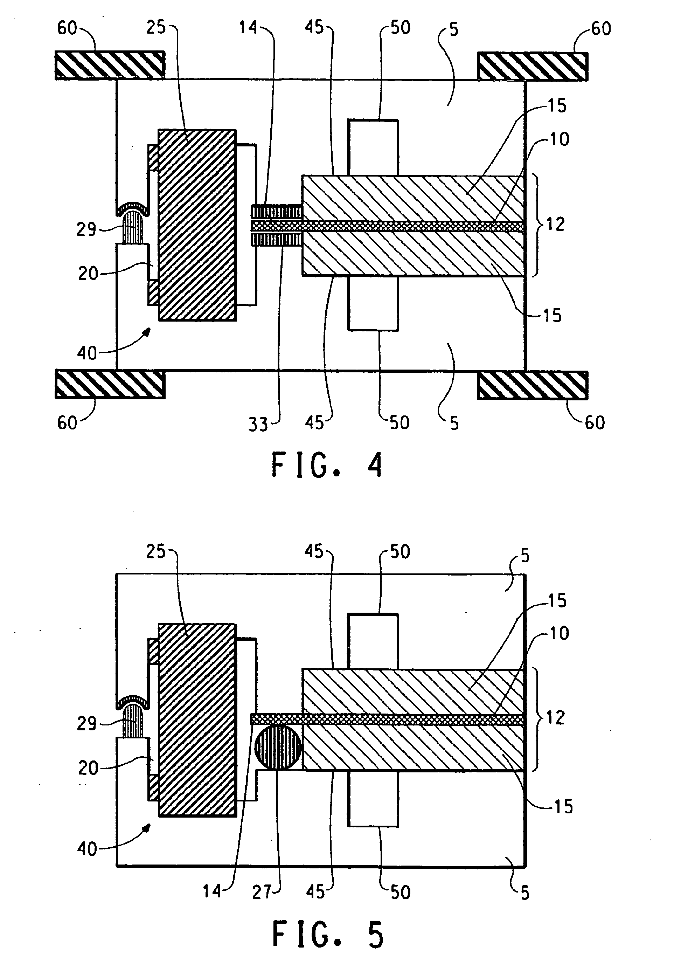

The general process for resistance welding is set out in U.S. Patent No. 4,673,450 to Burke. However, its application to fuel cells has not yet been explored. With the resistance welding process, an alternating or direct electrical current is used to heat the polymer insert 25 to create the seals. The electric current is applied to the sides of the top and bottom separator plates 5 through electrodes, such as the electrodes 60 shown in Figure 4, that touch the sides of the plates 5. As current flows through the conductive separator plates 5, localized heat is produced on the conductive separator plates 5, which causes the polymer insert 25 to melt and form a molten polymer. The molten polymer fuses the separator plates 5 together and fuses the separator plates 5 to the extended portion of the ion exchange membrane 14. When the current is stopped, pressure is continued to be applied to the separator plates 5 for compressing against each other as the molten polymer cools. As the current is withdrawn, localized heat production stops and the temperature of the molten polymer drops quickly, resulting in the solidification of the molten polymer, creating permanent seals.

Similar heating of the separator plates 5 and hence the melting of the polymer insert 25 can also be accomplished by heating the separator plate 5 and MEA 12 sub-assembly in a hot press or by placing the pressurized sub-assembly in an oven maintained above the melting temperature of the polymer insert 25.

It will be apparent that there are many other means that may also be used to generate good seals between the conductive separator plates 5 and the ion-exchange membrane 10, without deviating from the invention as claimed. For example, a single o-ring 27 may be used instead of two o-rings as shown in Figure 5. The shape of the landing surfaces of one of the conductive separator plates 5 can be altered such that the top surface of the ion-exchange membrane 14 lies directly under the flat surface of the landing, resulting in a perfect seal between the conductive separator plate 5 and ion-exchange membrane 14. A recessed area 45 should be made around the flow field channels 50 to accommodate the thickness of the GDL. The o-ring 27 can be placed beneath the ion-exchange membrane 14 to create a seal between the second conductive separator plate 5 and the lower surface of the ion-exchange membrane 14. No recessed area 45 is needed on the second separator plate, as the thickness of the o-ring will compensate for the GDL thickness. The advantage associated with this arrangement is that, under the pressure applied between the conductive separator plates 5, the o-ring 27 will exert force against the ion-exchange membrane 14, creating a seal between the ion-exchange membrane extended portion 14 and the conductive separator plates 5. The molten polymer resulting from the heating process will create a further seal between the conductive separator plates 5 and around the o-ring 27 to keep the plates 5 compressed together.

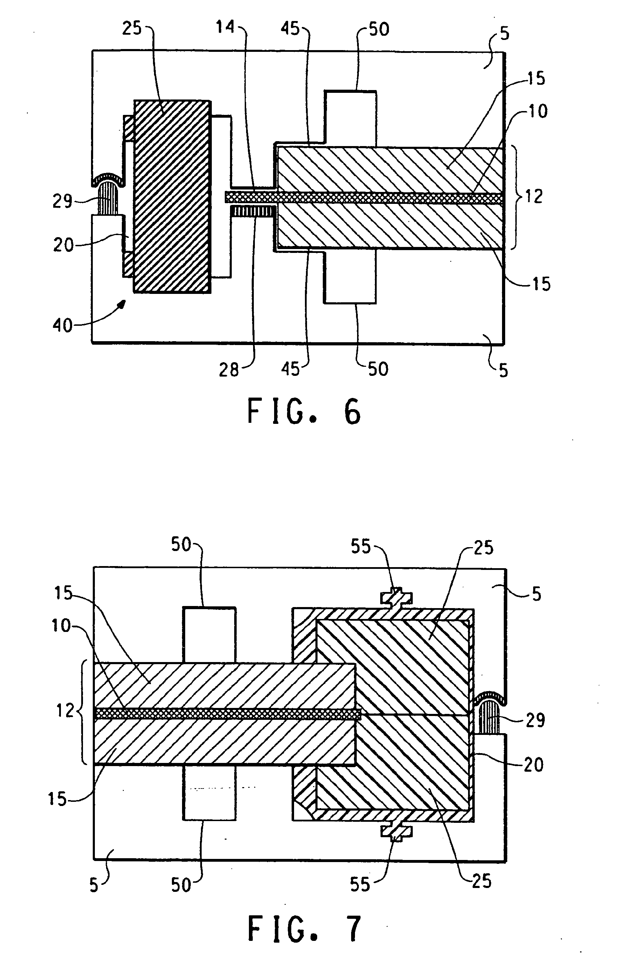

As shown in Figure 6, a tie material 28 may alternatively be used between one side of the membrane 14 and one of the separator plates 5 in place of the o-ring 27. By using tie material between the conductive separator plate 5 and the top or bottom surfaces of the ion-exchange membrane 14, the sealing area can be increased. An increased sealing area will result in more effective sealing. The tie materials will allow the ion-exchange membrane 14 to have a large engagement area with the conductive separator plate 5 and will reduce the pressure point exerted on the membrane 14. The separator plates 5 will be provided with recessed surface areas 45 around the flow field channels 50 to accommodate GDL into the recessed surface.

It will also be apparent to the person skilled in the art that the method of the present invention may be used to create seals around the MEA 12 directly (see Figure 7). In this further embodiment of the invention, the edge of the MEA 12 is disposed into the chamber 20 and the polymer insert 25 is formed around the MEA 12. The polymer insert 25 can be provided as two halves. Both bottom and top halves of the insert 25 can accommodate the edge of the MEA 12 so that it resides approximately at the centre of the polymer insert 25. When heat is applied to the separator plates 5, the polymer insert 25 melts into a molten polymer. The molten polymer flows and fuses between the separator plates 5 and around the edge of the MEA 12. The molten polymer will also flow through the porous matrix of the gas diffusion layers in the MEA 12 and create an edge seal around the MEA 12. Heating is then stopped and pressure is continued to be applied to the separator plates 5 to create a permanent seal between the separator plates 5 and around the MEA 12 upon cooling.

In this embodiment of the invention, the separator plates 5 may also include polymer traps 55 to prevent the separator plates 5 from separating once the molten polymer has solidified and the seal created. The polymer traps 55 are empty notches located on the upper and lower sidewalls of the chamber 20. During the heating process the molten polymer flows into the empty polymer traps 55. The flow increases as the pressure is applied, which will assist the polymer insert 25 to melt more and generate more molten polymer. Once heating is stopped, the temperature of the molten polymer will be decreased and the molten polymer in the traps 55 solidifies. The solidified polymer in the traps 55 will assist the seal formed by the polymer insert 25 to remain fixed within the conductive separator plates 5. In other words, the seal is anchored into the plates 5. Thus, the polymer traps 55 will prevent any displacement of the seals from their desired position.

The polymer of the polymer insert 25 may be comprised of thermoplastic polymers and can be in the shape of a bead, thin film or strip depending on the periphery design of the separator plates 5. Preferably, the polymer of the insert 25 and the sealant polymer material 33 is a heat activated adhesive material. Suitable thermoplastic polymers may be from any of the following classes. Modified polyolefins such as Bynel^{®} 4105, Bynel^{®} 40E529, Bynel^{®} 50E561, Fusabond^{®} 511 D, Engage^{®} 8402 all manufactured by E. I. Du Pont de Nemours & Company, Inc. Wilmington, DE, fall into this class. Polyolefins such as Sclair^{®} 2318, Sclair^{®} HDPE-19A manufactured by NOVA Chemicals Corporation, Calgary, Alberta, Canada, as well as PRIEX^{®} 11006, PRIEX^{®} 12030, PRIEX^{®} 63108 and PRIEX^{®} 63208, manufactured by Solvay, Netherlands falls into this category. Profax^{®} SB823 manufactured by Basell, Netherlands also falls into this category. Acid functionalised polyolefin adhesives manufactured by E. I. Du Pont de Nemours & Company, Inc. Wilmington, DE, as described in U.S. Patent Nos. 4861677, 5643999 and 6545091, can be used advantageously due to their adhesive property. For some applications, blends of two or more of these thermoplastic polymers may be used.

The thermoplastic polymer may also be optionally reinforced with fibres or inorganic fillers. Such reinforcements can reduce warpage and increase stiffness and strength of the seal in the final unitized cell structure. A blend of appropriate amount of Surlyn^{®} resin, manufactured by E. I. Du Pont de Nemours & Company, Inc. Wilmington, DE, with any of the above mentioned thermoplastic polymers, such as Bynel^{®} coextrudable adhesives, Fusabond^{®} adhesive resins and resin modifiers, etc. can be used to improve the elastic property of the thermoplastic polymer. Use of such a blend has the advantage of generating a seal material having desired elastic property along with its inherent sealing property.

To prevent oxidation induced degradation of the sealing materials in the electrochemical cell environment, which results in inferior physical and mechanical properties, an appropriate amount of antioxidant, such as Ciba^{®} IRGANOX^{®}, IRGAFOS^{®}, or PS802 can be blended with the above-mentioned thermoplastic polymers. The presence of antioxidant will reduce the oxidative degradation and enhance the durability of the sealing material. Examples of suitable antioxidants include phenolics, secondary amines, phophites and thioesters.

In the assembly of an electrochemical cell, the anode and cathode gas diffusion layers (GDL) occasionally puncture through the membrane and create a short circuit. To prevent this, a woven or non-woven porous matrix of insulating material or non-porous films can be used as a separator between the GDL and the membrane. The materials present in the insulating layer are generally non-conductive and should be noncontaminating to the fuel cell and thermally and dimensionally stable at fuel cell operating temperatures. Generally materials with a resistivity of greater than about 10⁴ ohm-cm, and more typically a resistivity of greater than about 10⁶ ohm-cm, and most typically a resistivity of greater than about 10⁹ ohm-cm are considered useful. Examples include woven Fiberglass Cloth, non-woven Kevlar^{®} paper, manufactured by E. I. Du Pont de Nemours & Company, Inc. Wilmington, DE, and non-porous films such as Dartek^{®}, Kapton^{®}, and Mylar^{®} films, manufactured by E.I. DuPont de Nemours & Company, Inc. Wilmington, DE. The adhesive sealant materials of the present invention can be used to impregnate through the porous matrix or bond to the non-porous films to create a seal between the membrane and GDL, and the GDL material will thus be prevented from penetrating through the membrane to cause a short circuit. The reinforcement of the woven or non-woven porous matrix or non-porous film by the adhesive sealant materials enhances the insulating property of the resultant sealing gaskets.

The following examples illustrate the various advantages of the preferred sub-assembly and method of the present invention.

### EXAMPLES

### Example 1:

A unitized cell was prepared by sandwiching a membrane electrode assembly (MEA) between two identical square pieces of composite plate parts comprising 25% Zenite^{®} liquid crystal polymer resin, 55% Thermocarb^{®} graphite powder and 20% graphite fibre. The parts had a length of 86.36 mm, width of 86.36 mm and a thickness of 1.78 mm. Recessed central areas having a length of 76.2 mm, a width of 76.2 mm and a depth of 0.127 mm were provided within both plate parts to accommodate the gas diffusion layers. An additional area of 5 mm around the perimeter of the recessed central areas was provided to be used as a sealing area. The composite plate parts were provided with corresponding holes at one corner of the plates to be used as a gas inlet or outlet for conducting the leak test of the unitized assembly. The diameter of the holes was 4.57 mm and they were each located at a distance of 12.7 mm away from both sides of the plates.

Two picture frame gaskets of 5.08 mm width of Bynel^{®} film with a thickness of 0.076 mm was cut from a sheet of Bynel^{®} film. The gasket was then carefully placed onto the selant area of the bottom plate. A three-layer sandwich comprising 0.0254 mm thick Nafion^{®} ion exchange membrane, manufactured by DuPont, Wilmington, DE, between two layers of a carbon-fiber based diffusion backing, "Sigracet" GDL 10 BB manufactured by SGL Carbon Group, Meitingen, Germany, each 0.036 mm thick in their uncompressed state, were placed in the square recessed area on the bottom plate. This sandwich was in essence a "dummy" MEA, in that it only lacked the electrocatalysis necessary for fuel cell function, but could serve mechanically and electrically to work in the same way.

The dimensions were as follows:
Square Nafion^{®} membrane was 86.36 mm x 86.36 mm.
The GDL was cut with a dimension of 76.2 mm x 76.2 mm.
The outer dimension of the picture frame of Bynel^{®} gasket was 86.36 mm x 86.36 mm and the width of the frame was 5.08 mm.

The assembly was arranged such that the edge of the bottom GDL overlapped with the first Bynel^{®} gasket. A second Bynel^{®} gasket possessing identical dimensions as the first gasket was placed so that it overlapped around the edge of the top GDL. The top plate was placed over this the top GDL in such a way that the gas diffusion layer was against the recessed portion of the top plate.

The layered assembly was placed in a hot press, preheated at 140 °C, and a pressure of 1.03 MPa was applied to it. The assembly was heated under pressure for four minutes and then it was allowed to cool down to 80°C under the applied pressure. The cooled assembly was taken out of the press and subjected to leak test to detemine the bonding strength of the unitized assembly.

The leak test was conducted as follows. Pressurized air at 10 PSI (0.07 MPa) at room temperature and pressurized hydrogen at 10 PSI (0.07 MPa) at 85°C were used. The small holes on the plates were used to introduce the gas/air into the assembly and the cell was kept under 10 PSI (0.07 MPa) pressure for 30 min and pressure drop in the cell was monitored. No significant pressure drop was recorded in the tested assembly units confirming good sealing and unitization of all the layers in the assembly units.

### Example 2:

A unitized cell was prepared using the tool and process described in Example 1 with the following exception: porous Kevlar^{®} gaskets were placed between the membrane and Bynel^{®} gaskets to prevent short circuit in the unitized assembly. The Kevlar® gaskets were cut with the same dimension as the Bynel^{®} gaskets and were placed right below and above the Nafion^{®} membrane. During the hot pressing process the molten Bynek^{®} impregnated the porous matrix of Kevlar^{®} and sealed it against Nafion^{®} membrane.

## Claims

1. A unitized electrochemical cell sub-assembly comprising:
(a) a first separator plate (5) and a second separator plate (5) each having a first surface;
(b) a recess in at least one of the first surfaces, wherein the recess defines a chamber (20) adjacent the periphery of the plates when the first surfaces of the plates face each other;
(c) a membrane electrode assembly (12) comprising an ion exchange membrane(10) and a pair of gas diffusion layers(15) disposed on each of the first surfaces between the first and second plates;
(d) the ion exchange membrane having a peripheral edge (14) located within the chamber; and
(c) a non-conductive sealant polymer(25) in the chamber that seals and joins the first and second plates to each other, and that seals and joins the first and second plates to the edge of the ion exchange membrane, said sealant polymer being a thermoplastic polymer selected from the group consisting of melt-processable polymers, fluorinated polymers, thermoplastic elastomers, liquid crystalline polymers, polyolefins, polyamides, aromatic condensation polymers, ionomeric polymers and mixtures thereof.

2. The unitized electrochemical cell sub-assembly of claim 1, wherein each of the first and second separator plates are plates selected from the group cor sisting of anode bipolar plate, cathode bipolar plate and coolant plate.

3. The unitized electrochemical cell sub-assembly of claim 1 or 2, wherein the non-conductive sealant polymer is also an electrical insulator for an electrochemical cell.

4. The unitized electrochemical cell sub-assembly of any one of claims 1-3, wherein the non-conductive sealant polymer is an acid modified polyolefin, preferably maleic anhydride modified polyolefin.

5. The unitized electrochemical cell sub-assembly of any one of claims 1-4, wherein the non-conductive sealant polymer is oxidatively stabilized with one or more antioxidant.

6. The unitized electrochemical cell sub-assembly of any one of claims 1-5, wherein each of the pair of gas diffusion layers has peripheral edges located within the chamber and the non-conductive sealant polymer seals and joins the first and second plates to the edges of the pair of gas diffusion layers.

7. The unitized electrochemical cell sub-assembly of any one of claims 1-6, wherein the first and second separator plates comprise: metal; a polymer composite comprising a polymer binder and conductive filler; or blends thereof, preferably the conductive filler comprises graphite fiber and graphite powder.

8. The unitized electrochemical cell sub-assembly of claim 7, wherein the polymer binder comprises a blend of about 1 wt% to 30 wt%, preferably about 5 wt% to about 25 wt%, of maleic anhydride modified polyolefin with a thermoplastic polymer, a partially fluorinated polymer, a liquid crystalline polymer, or mixtures thereof, and the non-conductive sealant polymer comprises a maleic anhydride modified polyolefin.

9. The unitized electrochemical cell sub-assembly of any one of claims 1-8, wherein each of the first surfaces of the plates further comprises a second recessed portion (45) configured to accommodate the gas diffusion layer(15).

10. The unitized electrochemical cell sub-assembly of any one of claims 1-9, further comprising one or more sealing gaskets (27) between the first surfaces of the plates (5) and the ion exchange membrane(10) to create further seals between the plates and the ion exchange membrane.

11. The unitized electrochemical cell sub-assembly of any one of claims 1-10, wherein the recess comprises a trap (55) containing a portion of the non-conductive sealant polymer (25) to anchor the sealant polymer to the plates.

12. The unitized electrochemical cell sub-assembly of any one of claims 1-11, comprising a first edge around the periphery of the first separator plate and a second edge around the periphery of the adjacent separator plate, wherein the first and second edges define a gap, and a gasket (29) is disposed in the gap.

13. A method of fabricating a unitized electrochemical cell sub-assembly comprising a first separator plate (5) and a second separator plate(5) each having a first surface, and a membrane electrode assembly (MEA) (12) comprising an ion exchange membrane (10) and a pair of gas diffusion layers (15) disposed on each of the first surfaces between the first and second plates, wherein the ion exchange membrane has a peripheral edge (14), the method comprising the steps of:
(a) providing a recess in at least one of the first surfaces, wherein the recess defines a chamber (20) adjacent the periphery of the plates when the first surfaces of the plates face each other;
(b) placing the MEA between the first and second plates so that the edge of the ion exchange membrane is located in the chamber;
(c) placing a non-conductive sealant polymer insert (25) in the chamber, said non-conductive sealant polymer being a thermoplastic polymer selected from the group consisting of melt-processable polymers, fluorinated polymers, thermoplastic elastomers, liquid crystalline polymers, polyolefins, polyamides, aromatic condensation polymers, ionomeric polymers and mixtures thereof ;
(d) applying heat and pressure to melt the sealant polymer to form a molten polymer; and
(e) ceasing to apply heat to cause the molten polymer to cool and harden around the edge of the ion exchange membrane, thereby scaling and joining the first and second plates to each other, and the first and second plates to the edge of the ion exchange membrane.

14. The method of claim 13, wherein the heat is applied by a technique selected from the group consisting of: resistance welding, ultrasonic welding, heat lamination, hot bonding, laser welding and vibration welding.

15. The method of claim 14, wherein the technique is resistance welding or hot bonding.

16. The method of any one of claims 13-15, wherein the pressure is continued to be applied after heating is ceased.

17. The method of any one of claims 13-16, wherein each of the first and second separator plates is a plate selected from the group consisting of anode bipo.ar plate, cathode bipolar plate and coolant plate.

18. The method of any one of claims 13-17, wherein the non-conductive sealant polymer is also an electrical insulator for an electrochemical cell.

19. The method of any one of claims 13-18, wherein the non-conductive sealant polymer is an acid modified polyolefin, preferably maleic anhydride modified polyolefin.

20. The method of any one of claims 13-19, wherein the non-conductive sealant polymer is oxidatively stabilized with one or more antioxidant.

21. The method of any one of claims 13-20, wherein each of the pair of gas diffusion layers has peripheral edges, and the method further comprises the step of placing the edges of the pair of gas diffusion layers within the chamber so that the non-conductive sealant polymer seals and joins the first and second plates to the edges of the pair of gas diffusion layers.

22. The method of any one of claims 13-21, wherein the first and second separator plates comprise: metal; a polymer composite comprising a polymer binder and conductive filler; or blends thereof, preferably the conductive filler comprises graphite fiber and graphite powder.

23. The method of claim 22, wherein the polymer binder comprises a blend of about 1 wt% to 30 wt%, preferably about 5 wt% to about 25 wt%, of maleic anhydride modified polyolefin with a thermoplastic polymer, a partially fluorinated polymer, a liquid crystalline polymer, or mixtures thereof, and the non-conductive sealant polymer comprises a maleic anhydride modified polyolefin.

24. The method of any one of claims 13-23, wherein the method further comprises the step of providing a second recessed portion (45) configured to accommodate the gas diffusion layer (15) on each of the first surfaces of the plates.

25. The method of any one of claims 13-24, further comprising providing one or more sealing gaskets (27) between the first surfaces of the plates (5) and the ion exchange membrane (10) to create further seals between the plates and the ion exchange membrane.

26. The method of claims 13-25, further comprising the step of forming a trap (55) in the recess wherein a portion of the molten polymer flows in the trap to anchor the sealant polymer (25) to the plates when the molten polymer hardens.

27. The method of claim 15 wherein the resistance welding technique comprises the steps of:
(a) applying an electrical current across the first and second separator plates to produce localized heat on the sealant polymer insert sufficient to melt the polymer and form the molten polymer; and
(b) ceasing to apply the current and applying pressure on the first and second separator plates to allow the molten polymer to cool.

28. The method of any one of claims 13-27, further comprising the step of securing at least a portion of the sealant polymer insert to the edge of the membrane electrode assembly prior to heating.

29. The method of any one of claims 13-28, wherein each of the first and second plates have an edge around their periphery, and the plate edges define a gap, the method comprising the step of disposing a gasket (29) in the gap.

## Patentansprüche

1. Modulare Unterbaugruppe einer elektrochemischen Zelle, die aufweist:
(a) eine erste Trennplatte (5) und eine zweite Trennplatte (5), die jeweils eine erste Oberfläche aufweisen;
(b) eine Vertiefung in mindestens einer der ersten Oberflächen, wobei die Vertiefung eine Kammer (20) definiert, die an den Rand der Platten angrenzt, wenn die ersten Oberflächen der Platten einander zugewandt sind;
(c) eine Membran-Elektroden-Einheit (12), die eine Ionenaustauschmembran (10) und ein Paar Gasdiffusionsschichten (15) aufweist, die auf jeder der ersten Oberflächen zwischen den ersten und zweiten Platten angeordnet sind;
(d) wobei die Ionenaustauschmembran eine innerhalb der Kammer liegende Umfangskante (14) aufweist; und
(e) ein nichtleitendes polymeres Dichtungsmaterial (25) in der Kammer, das die ersten und zweiten Platten abdichtet und miteinander verbindet und das die ersten und zweiten Platten an der Kante der Ionenaustauschmembran abdichtet und damit verbindet, wobei das polymere Dichtungsmaterial ein thermoplastisches Polymer ist, das aus der Gruppe ausgewählt ist, die aus schmelzverarbeitbaren Polymeren, fluorierten Polymeren, thermoplastischen Elastomeren, flüssigkristallinen Polymeren, Polyolefinen, Polyamiden, aromatischen Kondensationspolymeren, ionomeren Polymeren und deren Gemischen besteht.

2. Modulare Unterbaugruppe einer elektrochemischen Zelle nach Anspruch 1, wobei die ersten und zweiten Trennplatten jeweils Platten sind, die aus der Gruppe ausgewählt sind, die aus einer Anodenbipolarplatte, einer Kathodenbipolarplatte und einer Kühlmittelplarte besteht.

3. Modulare Unterbaugruppe einer elektrochemischen Zelle nach Anspruch 1 oder 2, wobei das nichtleitende polymere Dichtungsmaterial außerdem ein elektrischer Isolator für eine elektrochemische Zelle ist.

4. Modulare Unterbaugruppe einer elektrochemischen Zelle nach einem der Ansprüche 1-3, wobei das nichtleitende polymere Dichtungsmaterial ein säuremodifiziertes Polyolefin ist, vorzugsweise ein mit Maleinsäureanhydrid modifiziertes Polyolefin.

5. Modulare Unterbaugruppe einer elektrochemischen Zelle nach einem der Ansprüche 1-4, wobei das nichtleitende polymere Dichtungsmaterial mit einem oder mehreren Antioxidationsmitteln oxidationsbeständig gemacht wird.

6. Modulare Unterbaugruppe einer elektrochemischen Zelle nach einem der Ansprüche 1-5, wobei jede der zwei Gasdiffusionsschichten innerhalb der Kammer liegende Umfangskanten aufweist und das nichtleitende polymere Dichtungsmaterial die ersten und zweiten Platten an den Kanten der zwei Gasdiffusionsschichten abdichtet und damit verbindet.

7. Modulare Unterbaugruppe einer elektrochemischen Zelle nach einem der Ansprüche 1-6, wobei die ersten und zweiten Trennplatten aufweisen: Metall; einen Polymerverbundstoff, der ein Polymerbindemittel und leitfähigen Füllstoff oder Gemische daraus aufweist, wobei der leitfähige Füllstoff vorzugsweise Graphitfaser und Graphitpulver aufweist.

8. Modulare Unterbaugruppe einer elektrochemischen Zelle nach Anspruch 7, wobei das Polymerbindemittel ein Gemisch von 1 Ges.-% bis 30 Gew.-%, vorzugsweise etwa 5 Gew.-% bis etwa 25 Ges.-%, mit Maleinsäureanhydrid modifiziertem Polyolefin mit einem thermoplastischen Polymer, einem teilfluorierten Polymer, einem flüssigkristallinen Polymer oder Gemischen davon aufweist und das nichtleitende polymere Dichtungsmaterial ein mit Maleinsäureanhydrid modifiziertes Polyolefin aufweist.

9. Modulare Unterbaugruppe einer elektrochemischen Zelle nach einem der Ansprüche 1-8, wobei jede der ersten Oberflächen der Platten ferner einen zweiten vertieften Abschnitt (45) aufweist, der so konfiguriert ist, daß er die Gasdiffusionsschicht (15) aufnimmt.

10. Modulare Unterbaugruppe einer elektrochemischen Zelle nach einem der Ansprüche 1-9, die ferner eine oder mehrere Dichtungselemente (27) zwischen den ersten Oberflächen der Platten (5) und der Ionenaustauschmembran (10) aufweist, um weitere Dichtungen zwischen den Platten und der Ionenaustauschmembran zu erzeugen.

11. Modulare Unterbaugruppe einer elektrochemischen Zelle nach einem der Ansprüche 1-10, wobei die Vertiefung eine Falle (55) aufweist, die einen Teil des nichtleitenden polymeren Dichtungsmaterials (25) enthält, um das polymere Dichtungsmaterial an den Platten zu verankern.

12. Modulare Unterbaugruppe einer elektrochemischen Zelle nach einem der Ansprüche 1-11, die eine erste Kante rund um den Rand der ersten Trennplatte und eine zweite Kante rund um den Rand der benachbarten Trennplatte aufweist, wobei die erste und die zweite Kante einen Zwischenraum begrenzen und in dem Zwischenraum ein Dichtungselement (29) angeordnet ist.

13. Verfahren zur Herstellung einer modularen Unterbaugruppe einer elektrochemischen Zelle mit einer ersten Trennplatte (5) und einer zweiten Trennplatte (5), die jeweils eine erste Oberfläche aufweisen, und einer Membran-Elektroden-Einheit (MEA) (12), die einen lonenaustauschmembran (10) und ein Paar Gasdiffusionsschichten (15) aufweist, die aufjeder der ersten Oberflächen zwischen den ersten und zweiten Platten angeordnet sind, wobei die Ionenaustauschmembran eine innerhalb der Kammer liegende Umfangskante (14) aufweist, wobei das Verfahren die folgenden Schritte aufweist:
(a) Bereitstellen einer Vertiefung in mindestens einer der ersten Oberflächen, wobei die Vertiefung eine Kammer (20) definiert, die an den Rand der Platten angrenzt, wenn die ersten Oberflächen der Platten einander zugewandt sind;
(b) Anordnen der MEA zwischen den ersten und zweiten Platten, so daß die Kante der lonenaustauschmembran innerhalb der Kammer liegt;
(c) Anordnen eines nichtleitenden polymeren Dichtungsmaterialeinsatzes (25) in der Kammer, wobei das nichtleitende polymere Dichtungsmaterial ein thermoplastisches Polymer ist, das aus der Gruppe ausgewählt ist, die aus schmelzverarbeitbaren Polymeren, fluorierten Polymeren, thermoplastischen Elastomeren, flüssigkristallinen Polymeren, Polyolefinen, Polyamiden, aromatischen Kondensationspolymeren, ionomeren Polymeren und deren Gemischen besteht.
(d) Hitze- und Druckanwendung, um das polymere Dichtungsmaterial zu schmelzen und ein geschmolzenes Polymer zu bilden; und
(e) Beenden der Hitzeanwendung, um das geschmolzene Polymer abkühlen und um die Kante der Ionenaustauschmembran herum aushärten zu lassen, wodurch die ersten und zweiten Platten abgedichtet und miteinander verbunden werden und die ersten und zweiten Platten an der Kante der Ionenaustauschmembran abgedichtet und damit verbunden werden.

14. Verfahren nach Anspruch 13, wobei die Hitze nach einem Verfahren angewandt wird, das aus der Gruppe ausgewählt ist, die aus Widerstandsschweißen, Ultraschallschweißen, Heißlaminieren, Heißverkleben, Laserschweißen und Vibrationsschweißen besteht.

15. Verfahren nach Anspruch 14, wobei das Verfahren Widerstandsschweißen oder Heißverkleben ist.

16. Verfahren nach einem der Ansprüche 13-15, wobei der Druck nach Beenden des Erhitzens weiter angewandt wird.

17. Verfahren nach einem der Ansprüche 13-16, wobei jede der ersten und zweiten Trennplatten eine Platte ist, die aus der Gruppe ausgewählt ist, die aus einer Anodenbipolarplatte, einer Kathodenbipolarplatte und einer Kühlmittelplatte besteht.

18. Verfahren nach einem der Ansprüche 13-17, wobei das nichtleitende polymere Dichtungsmaterial außerdem ein elektrischer Isolator für eine elektrochemische Zelle ist.

19. Verfahren nach einem der Ansprüche 13-18, wobei das nichtleitende polymere Dichtungsmaterial ein säuremodifiziertes Polyolefin ist, vorzugsweise ein mit Maleinsäureanhydrid modifiziertes Polyolefin.

20. Verfahren nach einem der Ansprüche 13-19, wobei das nichtleitende polymere Dichtungsmaterial mit einem oder mehreren Antioxidationsmitteln oxidationsbeständig gemacht wird.

21. Verfahren nach einem der Ansprüche 13-20, wobei jede der zwei Gasdiffusionsschichten Umfangskanten aufweist, und wobei das Verfahren ferner den Schritt zum Anordnen der Kanten des Gasdiffusionsschichtenpaars innerhalb der Kammer aufweist, so daß das nichtleitende polymere Dichtungsmaterial die ersten und zweiten Platten an den Kanten der zwei Gasdiffusionsschichten abdichtet und damit verbindet.

22. Verfahren nach einem der Ansprüche 13-21, wobei die ersten und zweiten Trennplatten aufweisen: Metall; einen Polymerverbundstoff, der ein Polymerbindemittel und leitfähigen Füllstoff oder Gemische davon aufweist, wobei der leitfähige Füllstoff vorzugsweise Graphitfaser und Graphitpulver aufweist.

23. Verfahren nach Anspruch 22, wobei das Polymerbindemittel ein Gemisch von 1 Gew.-% bis 30 Gew.-%, vorzugsweise etwa 5 Gew.-% bis etwa 25 Gew.-%, mit Maleinsäureanhydrid modifiziertem Polyolefin mit einem thermoplastischen Polymer, einem teilfluorierten Polymer, einem flüssigkristallinen Polymer oder Gemischen davon aufweist und das nichtleitende polymere Dichtungsmaterial ein mit Maleinsäureanhydrid modifiziertes Polyolefin aufweist.

24. Verfahren nach einem der Ansprüche 13-23, das Verfahren ferner den Schritt zur Bereitstellung eines zweiten vertieften Abschnitts (45) aufweist, der so konfiguriert ist, daß er die Gasdiffusionsschicht (15) aufjeder ersten Oberfläche der Platten aufnimmt.

25. Verfahren nach einem der Ansprüche 13-24, das ferner die Bereitstellung einer oder mehrerer Dichtungselemente (27) zwischen den ersten Oberflächen der Platten (5) und der Ionenaustauschmembran (10) aufweist, um weitere Dichtungen zwischen den Platten und der Ionenaustauschmembran zu erzeugen.

26. Verfahren nach einem der Ansprüche 13-25, das ferner den Schritt zur Ausbildung einer Falle (55) in der Vertiefung aufweist, wobei ein Teil des geschmolzenen Polymers in die Falle fließt, um das polymere Dichtungamaterial (25) an den Platten zu verankern, wenn das geschmolzene Polymer aushärtet.

27. Verfahren nach Anspruch 15, wobei das Widerstandsschweißverfahren die folgenden Schritte aufweist:
(a) Anlegen eines elektrischen Stroms an die ersten und zweiten Trennplatten, um an dem polymeren Dichtungsmaterial lokalisierte Wärme zu erzeugen, die ausreicht, um das Polymer zu schmelzen und das geschmolzene Polymer zu bilden; und
(b) Beenden der Stromeinspeisung und Anwenden von Druck auf die ersten und zweiten Trennplatten, um das geschmolzene Polymer abkühlen zu lassen.

28. Verfahren nach einem der Ansprüche 13-27, das ferner den Schritt zum Befestigen zumindest eines Teils der polymeren Dichtungsmaterialeinsatzes an der Kante der der Membran-Elektroden-Einheit vor dem Erhitzen aufweist.

29. Verfahren nach einem der Ansprüche 13-28, wobei die ersten und zweiten Platten jeweils rund um ihren Rand eine Kante aufweisen und die Plattenkanten einen Zwischenraum begrenzen, wobei das Verfahren einen Schritt zum Anbringen eines Dichtungselements (29) in dem Zwischenraum aufweist.

## Revendications

1. Sous-ensemble de pile à combustible monobloc, comprenant;
(a) une première plaque séparatrice (5) et une seconde plaque séparatrice (5), chacune ayant une première surface;
(b) un creux dans au moins l'une des premières surfaces, le creux définissant une enceinte (20) adjacente à la périphérie des plaques lorsque les premières surfaces des plaques se font face;
(c) un ensemble d'électrode à membrane (12) comprenant une membrane échangeuse d'ions (10) et une paire de couches de diffusion de gaz (15) disposées sur chacune des premières surfaces entre les première et seconde plaques;
(d) la membrane échangeuse d'ions ayant un bord périphérique (14) se trouvant à l'intérieur de l'enceinte; et
(e) un polymère d'étanchéité non conducteur (25) dans l'enceinte qui scelle et joint les première et seconde plaques entre elles, et qui scelle et joint les première et seconde plaques au bord de la membrane échangeuse d'ions, ledit polymère d'étanchéité étant un polymère thermoplastique choisi dans le groupe constitué par les polymères préparables à l'état fondu, les polymères fluorés, les élastomères thermoplastiques, les polymères cristallins liquides, les polyoléfines, les polyamides, les polymères de condensation aromatiques, les polymères ionomériques et des mélanges de ceux-ci.

2. Sous-ensemble de pile à combustible monobloc selon la revendication 1, dans lequel chacune des première et seconde plaques séparatrices sont des plaques choisies dans le groupe constitué par une plaque bipolaire anodique, une plaque bipolaire cathodique et une plaque de refroidissement.

3. Sous-ensemble de pile à combustible monobloc selon la revendication 1 ou 2, dans lequel le polymère d'étanchéité non conducteur est aussi un isolant électrique pour une pile à combustible.

4. Sous-ensemble de pile à combustible monobloc selon l'une quelconque des revendications 1 à 3, dans lequel le polymère d'étanchéité non conducteur est une polyoléfine modifiée par un acide, de préférence une polyoléfine modifiée par un anhydride maléique.

5. Sous-ensemble de pile à combustible monobloc selon l'une quelconque des revendications 1 à 4, dans lequel le polymère d'étanchéité non conducteur est stabilisé à l'oxydation avec un ou plusieurs antioxydants.

6. Sous-ensemble de pile à combustible monobloc selon l'une quelconque des revendications 1 à 5, dans lequel chacune de la paire de couches de diffusion de gaz a des bords périphériques se trouvant à l'intérieur de l'enceinte et le polymère d'étanchéité non conducteur scelle et joint les première et seconde plaques aux bords de la paire de couches de diffusion de gaz.

7. Sous-ensemble de pile à combustible monobloc selon l'une quelconque des revendications 1 à 6, dans lequel les première et seconde plaques séparatrices comprennent: un métal; un composite polymère comprenant un liant polymère et une charge conductrice; ou des mélanges de ceux-ci, de préférence la charge conductrice comprend une fibre de graphite et une poudre de graphite.

8. Sous-ensemble de pile à combustible monobloc selon la revendication 7, dans lequel le liant polymère comprend un mélange d'environ 1% en poids à 30% en poids, de préférence environ 5% en poids à environ 25% en poids de polyoléfine modifiée par un anhydride maléique, avec un polymère thermoplastique, un polymère partiellement fluoré, un polymère cristallin liquide, ou des mélanges de ceux-ci, et le polymère d'étanchéité non conducteur comprend une polyoléfine modifiée par un anhydride maléique.

9. Sous-ensemble de pile à combustible monobloc selon l'une quelconque des revendications 1 à 8, dans lequel chacune des premières surfaces des plaques comprend en outre une seconde partie en creux (45) configurée pour loger la couche de diffusion de gaz (15).

10. Sous-ensemble de pile à combustible monobloc selon l'une quelconque des revendications 1 à 9, comprenant en outre un ou plusieurs joints d'étanchéité (27) entre les premières surfaces des plaques (5) et la membrane échangeuse d'ions (10) pour créer des scellements supplémentaires entre les plaques et la membrane échangeuse d'ions.

11. Sous-ensemble de pile à combustible monobloc selon l'une quelconque des revendications 1 à 10, dans lequel le creux comprend une trappe (55) contenant une partie du polymère d'étanchéité non conducteur (25) pour ancrer le polymère d'étanchéité aux plaques.

12. Sous-ensemble de pile à combustible monobloc selon l'une quelconque des revendications 1 à 11, comprenant un premier bord autour de la périphérie de la première plaque séparatrice et un second bord autour de la périphérie de la plaque séparatrice adjacente, dans lequel les premier et second bords définissent un espace, et un joint (29) est disposé dans l'espace.

13. Procédé de fabrication d'un sous-ensemble de pile à combustible monobloc comprenant une première plaque séparatrice (5) et une seconde plaque séparatrice (5), chacune ayant une première surface, et un ensemble d'électrode à membrane (MEA) (12) comprenant une membrane échangeuse d'ions (10) et une paire de couches de diffusion de gaz (15) disposées sur chacune des premières surfaces entre les première et seconde plaques, dans lequel la membrane échangeuse d'ions a un bord périphérique (14), le procédé comprenant les étapes consistant:
(a) à fournir un creux dans au moins l'une des premières surfaces, le creux définissant une enceinte (20) adjacente à la périphérie des plaques lorsque les premières surfaces des plaques se font face;
(b) à placer le MEA entre les première et seconde plaques de sorte que le bord de la membrane échangeuse d'ions se trouve dans l'enceinte;
(c) à placer un insert de polymère d'étanchéité non conducteur (25) dans l'enceinte, ledit polymère d'étanchéité non conducteur étant un polymère thermoplastique choisi dans le groupe constitué par les polymères préparables à l'état fondu, les polymères fluorés, les élastomères thermoplastiques, les polymères cristallins liquides, les polyoléfines, les polyamides, les polymères de condensation aromatiques, les polymères ionomériques et des mélanges de ceux-ci;
(d) à appliquer de la chaleur et de la pression pour faire fondre le polymère d'étanchéité et former un polymère fondu; et
(e) à cesser d'appliquer de la chaleur pour faire en sorte que le polymère fondu refroidisse et durcisse autour du bord de la membrane échangeuse d'ions, scellant et joignant ainsi les première et seconde plaques l'une à l'autre, et les première et seconde plaques au bord de la membrane échangeuse d'ions.

14. Procédé selon la revendication 13, dans lequel la chaleur est appliquée par une technique choisie dans le groupe constitué par: le soudage par résistance, le soudage ultrasonore, la stratification thermique, le collage à chaud, le soudage par laser et le soudage par vibration.

15. Procédé selon la revendication 14, dans lequel la technique est le soudage par résistance ou le collage à chaud.

16. Procédé selon l'une quelconque des revendications 13 à 15, dans lequel la pression continue à être appliquée après l'arrêt du chauffage.

17. Procédé selon l'une quelconque des revendications 13 à 16, dans lequel chacune des première et seconde plaques séparatrices est une plaque choisie dans le groupe constitué par une plaque bipolaire anodique, une plaque bipolaire cathodique et une plaque de refroidissement.

18. Procédé selon l'une quelconque des revendications 13 à 17, dans lequel le polymère d'étanchéité non conducteur est aussi un isolant électrique pour une pile à combustible.

19. Procédé selon l'une quelconque des revendications 13 à 18, dans lequel le polymère d'étanchéité non conducteur est une polyoléfine modifiée par un acide, de préférence une polyoléfine modifiée par un anhydride maléique.

20. Procédé selon l'une quelconque des revendications 13 à 19, dans lequel le polymère d'étanchéité non conducteur est stabilisé à l'oxydation avec un ou plusieurs antioxydants.

21. Procédé selon l'une quelconque des revendications 13 à 20, dans lequel chacune de la paire de couches de diffusion de gaz a des bords périphériques, et le procédé comprend en outre l'étape consistant à placer les bords de la paire de couches de diffusion de gaz à l'intérieur de l'enceinte de sorte que le polymère d'étanchéité non conducteur scelle et joint les première et seconde plaques aux bords de la paire de couches de diffusion de gaz.

22. Procédé selon l'une quelconque des revendications 13 à 21, dans lequel les première et seconde plaques séparatrices comprennent: un métal; un composite polymère comprenant un liant polymère et une charge conductrice; ou des mélanges de ceux-ci; de préférence la charge conductrice comprend une fibre de graphite et une poudre de graphite.

23. Procédé selon la revendication 22, dans lequel le liant polymère comprend un mélange d'environ 1% en poids à 30% en poids, de préférence environ 5% en poids à environ 25% en poids de polyoléfine modifiée par un anhydride maléique, avec un polymère thermoplastique, un polymère partiellement fluoré, un polymère cristallin liquide, ou des mélanges de ceux-ci, et le polymère d'étanchéité non conducteur comprend une polyoléfine modifiée par un anhydride maléique.

24. Procédé selon l'une quelconque des revendications 13 à 23, le procédé comprenant en outre l'étape consistant à fournir une seconde partie en creux (45) configurée pour loger la couche de diffusion de gaz (15) sur chacune des premières surfaces des plaques.

25. Procédé selon l'une quelconque des revendications 13 à 24, comprenant en outre la fourniture d'un ou plusieurs joints d'étanchéité (27) entre les premières surfaces des plaques (5) et la membrane échangeuse d'ions (10) pour créer des scellements supplémentaires entre les plaques et la membrane échangeuse d'ions.

26. Procédé selon les revendications 13 à 25, comprenant en outre l'étape consistant à former une trappe (55) dans le creux, dans laquelle une partie du polymère fondu s'écoule dans la trappe pour ancrer le polymère d'étanchéité (25) aux plaques lorsque le polymère fondu durcit.

27. Procédé selon la revendication 15, dans lequel la technique de soudage par résistance comprend les étapes consistant:
(a) à appliquer un courant électrique à travers les première et seconde plaques séparatrices pour produire une chaleur localisée sur l'insert de polymère d'étanchéité suffisante pour faire fondre le polymère et former le polymère fondu; et
(b) à cesser d'appliquer le courant et d'appliquer une pression sur les première et seconde plaques séparatrices pour permettre au polymère fondu de refroidir.

28. Procédé selon l'une quelconque des revendications 13 à 27, comprenant en outre l'étape consistant à fixer au moins une partie de l'insert de polymère d'étanchéité au bord de l'ensemble d'électrode à membrane avant le chauffage.

29. Procédé selon l'une quelconque des revendications 13 à 28, dans lequel chacune des première et seconde plaques a un bord autour de sa périphérie, et les bords des plaques définissent un espace, le procédé comprenant l'étape consistant à disposer un joint (29) dans l'espace.
